Europäisches Patentamt

(19) European Patent Office

Office européen des brevets

(11) Publication number:

**0 085 645**

**A2**

# (12) EUROPEAN PATENT APPLICATION

(21) Application number: 83630017.8

(22) Date of filing: 01.02.83

(51) Int. Cl.³: **B 41 J 5/10**

(30) Priority: 02.02.82 IL 64914
22.08.82 IL 66603

(43) Date of publication of application:
10.08.83 Bulletin 83/32

(84) Designated Contracting States:
AT BE CH DE FR GB IT LI LU NL SE

(71) Applicant: ERGOPLIC LTD.
P.O. Box 675
Kiron(IL)

(72) Inventor: Eilam, Zohar
5 Blum St.
Ramat Aviv(IL)

(72) Inventor: Bar Itzchak, Zeev
31/8 Gedaliahu St.
Neve Shaanan Haifa(IL)

(74) Representative: Weydert, Robert et al,
Office Dennemeyer S.à.r.l. 21-25 Allée Scheffer P.O. Box
41
Luxembourg(LU)

㊿ Keyboard apparatus and method.

㊿ A chordic keyboard including a plurality of keys, each key having a predetermined travel path and an entry location disposed at a predetermined location along the predetermined travel path, the plurality of keys arranged for engagement by respective first, second and third fingers, the first, second and third keys having differences between themselves in one or more of their predetermined travel paths, entry locations and force requirements.

There is also provided a method for high speed teaching of chordic key code operation comprising the steps of:

selecting a plurality of chordic keyboard engagement location arrangements having a predetermined visually sensible geometric relationship therebetween;

assigning to each of the plurality of location engagement arrangements a symbol corresponding thereto; and

presenting the plurality of location engagement arrangements together with a word defined by the plurality of symbols corresponding thereto for memorization by an operator during training.

FIG.3A

EP 0 085 645 A2

## KEYBOARD APPARATUS AND METHOD. 0085645

The present invention relates to keyboards generally and more particularly to chordic keyboards and to techniques which greatly increase the efficiency of learning operation of such keyboards and to codes useful therein.

Various types of chordic keyboards are known and are described in the literature. Examples of such keyboards are described in the following publications:

1. N. Rochester, F. Bequaert and E.M. Sharp, "The Chord Keyboard" COMPUTER, December 1978, pp. 57 - 63;

2. R.C. Sidorsky, "Alpha Dot, A New Approach to Direct Computer Entry of Battlefield Data" Technical Report 249, U.S. Army Research Institute for the Behavioral and Social Sciences, 1974;

3. U.K. Patent Specification 1,500,674;

4. U.K. Patent Application 2,015,220.

A particularly successful chordic keyboard is disclosed and claimed in applicants' co-pending U.K. Patent Application 8036839 which was published on June 10, 1981 as Published Patent Application 2,064,187 A and describes and claims a multiple set interactive code arrangement as well as mnemonic devices which speed learning of keyboard operation and enable quick recall of the chordic code employed. Constructional features of the keyboard providing enhanced motoric efficiency are also described in that Patent Application.

Further research by the applicants has indicated the importance of key functioning to the overall motoric efficiency of a chordic keyboard. The present invention is directed to keyboard key structures in a chordic keyboard which greatly enhance the operational efficiency thereof.

Generally speaking it is known to use mnemonic devices for teaching code operations. Such mnemonic devices, for example as described in U.K. Patent Specification 8,036, 839 employ a geometrical association concept in which the shape of a letter or other symbol to be coded has a certain geometrical resemblance to the configuration of engagement locations required to encode or define such a letter or symbol.

None of the prior art literature, including patent literature, on chordic keyboards teaches the use of a group approach to chordic keyboard code teaching.

The present invention seeks to provide a chordic keyboard having significantly enhanced motoric efficiency as compared with chordic keyboards of the prior art.

There is thus provided in accordance with a preferred embodiment of the invention a chordic keyboard including a plurality of keys, each key having a predetermined travel path and an entry location disposed at a predetermined location along the predetermined travel path, the plurality of keys arranged for engagement by respective first, second and third fingers, the first, second and third keys having differences between themselves in one or more of their predetermined travel paths, entry locations and force requirements.

Additionally in accordance with an embodiment of the present invention there is provided a chordic keyboard including a plurality of keys, each key having a predetermined travel path of length in the range of 3 - 9 mm.

Further in accordance with an embodiment of the invention, there is provided a chordic keyboard including a plurality of keys, the keys having a linear force/ displacement characteristic over their travel paths.

Still further in accordance with an embodiment of the present invention, the entry location of each key is located at a position between one third and one half of the distance from the at rest position of the key to its fully depressed position.

Additionally in accordance with an embodiment of the present invention, there is provided a chordic keyboard including a plurality of keys, each key having a predetermined travel path which is arranged along a travel axis, the travel axes of various keys being non-parallel.

Further in accordance with an embodiment of the present invention, the travel axes of the various keys are arranged to be parallel to the axes of force exertion of human fingers arranged to engage the respective keys.

Additionally in accordance with an embodiment of the present invention there is provided apparatus for providing a repeat key output when a key is depressed for a time beyond 200 - 600 msec.

The present invention also relates to a method for high speed teaching of chordic keyboard code operation. In accordance with an embodiment of the present invention the method comprises the steps of:

selecting a plurality of chordic keyboard engagement location arrangements having a predetermined visually sensible geometric relationship therebetween;

assigning to each of the plurality of location engagement arrangements a symbol corresponding thereto; and

presenting the plurality of location engagement arrangements together with a word defined by the plurality of symbols corresponding thereto for memorization by an operator during training.

Further in accordance with an embodiment of the invention each of the plurality of location engagement arrangements and corresponding words defines a group which is remembered by interassociation therebetween. A plurality of such groups containing therewithin all of the symbols sought to be taught are defined and taught to the operator during training.

Additionally in accordance with an embodiment of the invention there is provided a high speed teachable code for use with chordic keyboards and comprising:

a first plurality of groups of associated symbols and location engagement arrangements, each group comprising:

a second plurality of location engagement arrangements having a visually sensible geometrical relationship therebetween, each of the location engagement arrangements having associated therewith a symbol, the symbols of each group being combinable in a readily memorizable word.

In accordance with a preferred embodiment of the invention the symbols comprise letters.

The present invention will be more fully understood and appreciated from the following detailed description taken in conjunction with the drawings in which:

Fig. 1 is a diagrammatic illustration of the operation of a prior art key employed in a prior art keyboard;

Fig. 2 is a diagrammatic illustration of the operation of a key employed in a chordic keyboard constructed and operative in accordance with the present invention;

Figs. 3A and 3B are respective top view and back view illustrations of a chordic keyboard constructed and operative in accordance with an embodiment of the present invention;

Fig. 4 is a side view illustration of the chordic keyboard of Fig. 3 bearing indications of the travel axes of the individual keys;

Figs. 5 and 6 are respective top and side view illustrations of the chordic keyboard of Figs. 3 and 4 in operation;

Fig. 7 is a side view illustration of a human hand illustrating the type of motion encountered in multiple key engagement;

Fig. 8 is a side view illustration of a human hand illustrating the type of motion encountered in single key engagement;

Fig. 9 illustrates a key constructed and operative in accordance with a preferred embodiment of the present invention;

Fig. 10 is an illustration of a plurality of groups of location engagement arrangements and corresponding symbols according to a preferred embodiment of the invention;

Fig. 11 is an illustration of a plurality of alternative number coding conventions; and

Fig. 12 is a partial illustration of a plurality of symbol coding conventions.

Extensive research carried out by applicants has led to an appreciation of the importance of correct key operation characteristics in chordic keyboard performance. A brief description of the results of this research will be presented hereinbelow in order to enable a complete understanding of the present invention in its context.

It is well known in the design of push buttons and switches that some type of feedback must be provided to an operator to indicate to him that he has completed an operation and thus to enable him to proceed to a subsequent operation. Such feedback may take a number of forms, including, for example, auditory feedback, such as beeps emitted by calculators upon actuation of a number key; visual feedback, such as the light illuminated on a push button in an elevator upon actuation thereof; tactile feedback, such as the sensed contact between an operator's fingers and a key employed in non-moving switch contacts in calculators and elevators etc.; and kinesthetic feedback, such as the sensed motion of a key on a typewriter.

It has been found that visual and auditory feedback is not normally sufficient for keyboard operation since it is not sufficiently time definitive and thus requires too much time between subsequent operations. The general wisdom regarding feedback to push button operation is summarized by C.R. Clare in Electronic Design News, April 20, 1976 at page 99 as follows: " The natural or expected consequences of a push is a tactile response. Sudden well-defined changes in pressure, accompanied by an audible signal that is related to the pressure change, are the most acceptable responses."

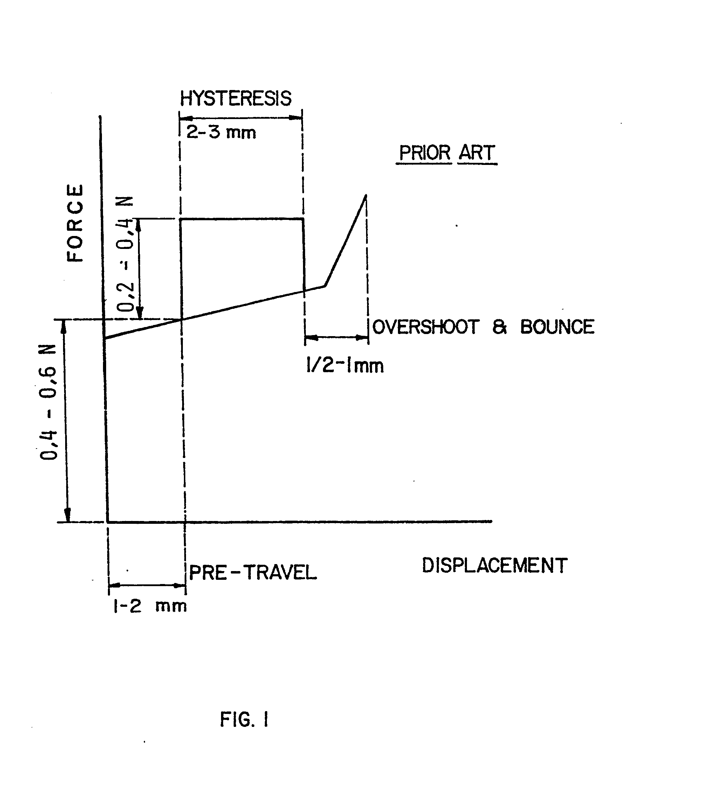

Reference is made to Fig. 1 which illustrates characteristics of a conventional prior art key such as that used in a manual or electric typewriter. The diagram of Fig. 1 is a force versus displacement curve which indicates that over a rather short pre-travel interval of between 1 - 2 mm, the force displacement relationship is generally linear and increasing, requiring about 0,4 - 0,6 N. Following the pre-travel interval there is a discrete sudden increase in the required force by another 0,2 - 0,4 N. This force is maintained constant over a displacement interval of between 2 and 3 mm and then suddenly falls to an intermediate level. The force increases slowly from the intermediate level for about one-quarter mm. and then suddenly increases linearly at a significantly higher rate producing an overshoot and bounce back effect over a total of between one-half and 1 mm approximately.

The return path of the key is different from the forward, i.e. depression, path in terms of its force characteristics and defines a generally linear force displacement relationship beyond the overshoot-bounce area.

The entry location at which electrical or mechanical contact is made for data entry extends over a relatively large range of displacements, typically 1 - 2 mm, along which the force is relatively constant during key displacement.

The keys of the type described hereinabove in connection with Fig. 1 are in general use in conventional and chordic keyboards. It is a particular feature of the present invention that it has been appreciated that keys of this type are not suitable for high speed operation chordic keyboards. The research conducted by applicants has indicated that keyboards of the prior art are unsuitable for the following reasons:

1. In contrast to conventional typewriter keyboards wherein the operator's fingers move from one key to another, in the operation of chordic keyboards, the operator's fingers rest on the keys throughout operation;

2. In contrast to conventional typewriter keyboards wherein only a single key is normally depressed at a given time, in the operation of chordic keyboards, a plurality of keys are normally depressed simultaneously during operation;

3. Whereas in the operation of conventional typewriter keyboards, the discrete increase in force encountered along the key travel path as mentioned in connection with Fig. 1 is operative to produce a reaction in the operator's hand which provides the necessary feedback of a tactile type, such feedback is not sufficient to indicate to an operator of a chordic keyboard which finger or fingers are operating keys at a given time.

4. In chordic keyboards such as that described by the applicants in aforesaid Published British Patent Application 2,064,187, the hand of the operator normally rests on a hand rest, at the heel of the hand during keyboard operation. This significantly reduces the feedback transmitted from the fingers back to the arm.

5. The difficulties raised in points 3 and 4 hereinabove could be overcome in principle by significantly increasing the required force exertion for key operation. This is not practical, however, since in chordic keyboard operation more than one key is pressed at a given time, thus producing a cumulative force requirement which would easily tire the operator. This is true notwithstanding that chordic keyboard operation involves significant wrist action, since even when wrist action is involved, individual finger action is also present.

Applicants have also carried out a detailed study of the type and origin of errors in chordic keyboard operation. Two types of errors have been identified, cognitive errors and motoric errors.

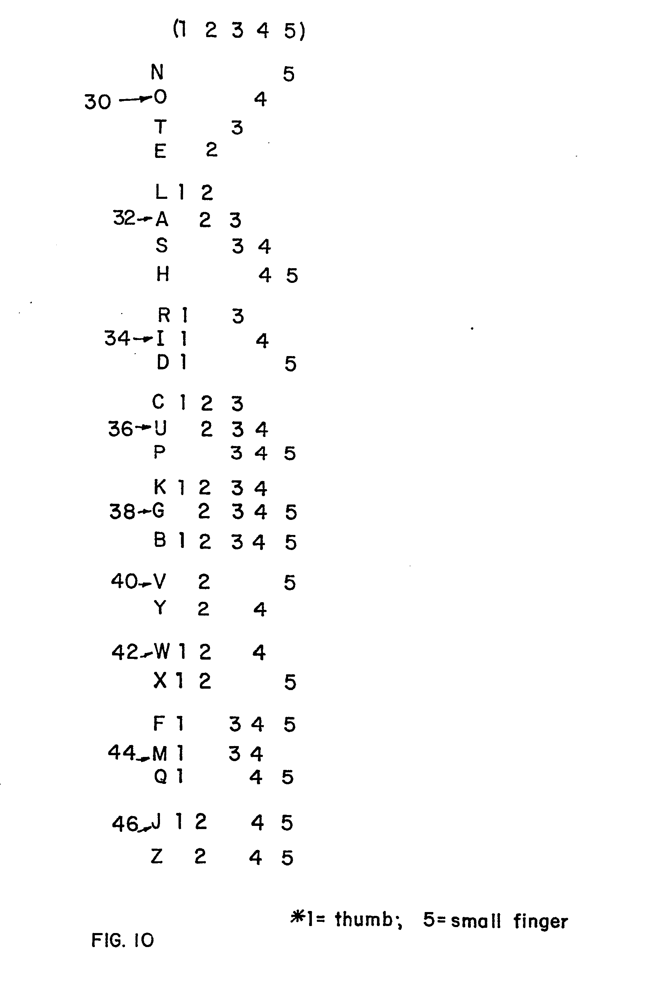

Cognitive errors involve mistaken associations between given symbols and their key operation codes. Most cognitive errors arise between symbols which have symmetric codes, such as A and S in the typical code illustrated in Fig. 10.

Motoric errors involve undesired movements and placements of fingers. One source of motoric errors is the well known phenomenon that the movement of certain fingers involuntarily draws other fingers into associated movement. This phenomenon makes certain differential movements and positioning of fingers difficult. An example of the difficulty may be seen by reference to Fig. 10 where an intended indication of I may produce a M instead. Engagement and subsequent disengagement of a key produces an erroneous key entry upon disengagement.

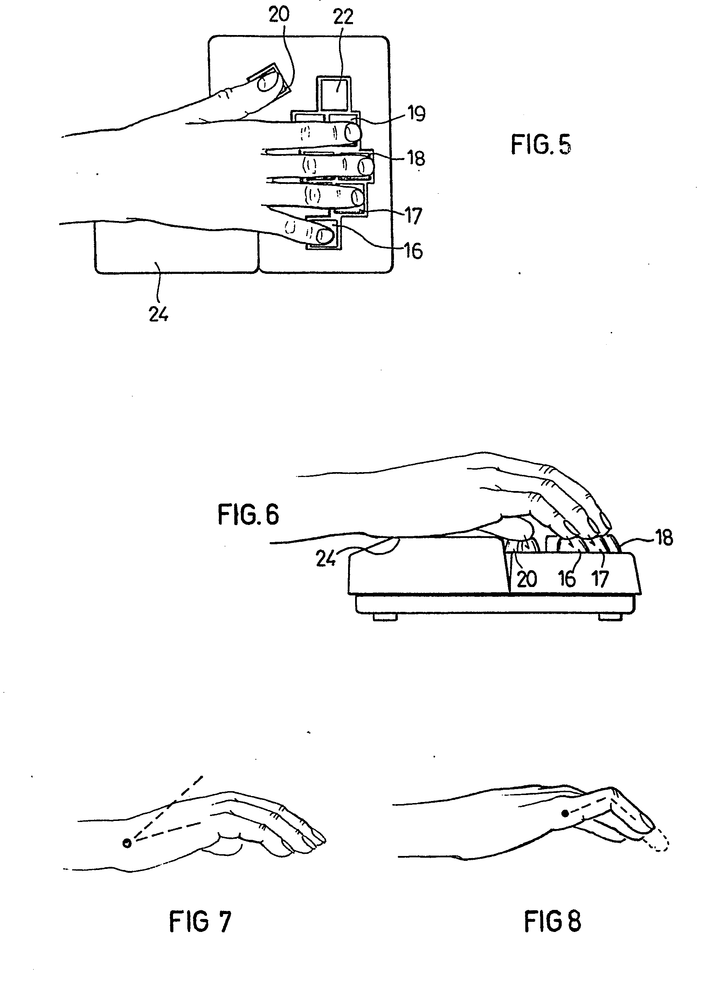

A specific example of a cause of this type of motoric error lies in the anatomy of the human hand. As seen by reference to Gray's Anatomy, 28th Edition, page 471 at Fig. 6 - 43, finger 4, the finger next to the little finger is the only finger that does not have an independent tendon all to itself. It follows that the independent movement of this finger is extremely limited.

A second source of motoric errors is the failure of fingers to fully transverse the intended travel distance or the failure of the fingers to provide the desired amount of pressure. An example of this difficulty may be seen by reference to Fig. 10 where an intended indication of G may produce a U instead, due to incomplete or insufficient operation of the little finger.

It is to be stressed that the above-described types of errors are particularly characteristic of operation of chordic keyboards. It is therefore extremely important that the structure of the chordic keyboard be such that such errors are identified quickly and unambiguously as to finger by appropriate feedback. It is equally important that the structure of the chordic keyboard be such that such errors are prevented insofar as possible.

A further requirement for a commercially acceptable chordic keyboard is that a repeat function be provided for symbols such as dashes, underlining, backspacing etc. In conventional chordic keyboards, such as those described in references 2, 3 and 4 listed in the Background of the Invention hereinabove, this function is absent since data entry is provided only when all of the keys are released.

On the basis of the above studies and investigations, applicants have reached the following conclusions regarding the structure of chordic keyboards:

1. All feedback which is specific to a given single finger, such as, for example, an audio feedback or a change in finger pressure, is to be eliminated.

2. Tactile feedback which is produced by contact with the keys is irrelevant where contact is maintained with the keys even between actuation thereof.

3. The only efficient type of feedback is kinesthetic feedback which is produced by travel of the fingers or encountering a relatively high resisting force during key actuation. In particular it is appreciated that as the travel path of the fingers is lengthened, the operator's ability to distinguish between fingers in a hand supported operating environment is significantly enhanced. It is appreciated that there exists a physiological distinguishing threshold for each finger and that this threshold differs for different fingers, thus the travel path of each finger is different in a preferred construction of a chordic keyboard. For example, in practice, it is noted that the desired travel path of the thumb is significantly greater than that of the remaining fingers.

4. The required pressure for operating the keys should be relatively small, under 0,5 N, approximately, so as to enable chordic keyboard operation with ease and without unduly tiring the operator.

5. The required pressure may vary from key to key. This is necessary in view of the different strengths of the individual fingers of the human hand.

6. The location of the data entry locations along the travel paths of the keys is selected to overcome problems of finger drag and the failure of fingers to travel the entire path. These two sources of errors are to a certain extent directed in opposite directions but it has been appreciated that the former is less critical than the latter. Thus the data entry locations are placed about one-third to one-half along the travel path from the undepressed position. The location of the data entry locations may vary from key to key.

7. The travel paths of the keys should be oriented along the axes of force exertion of the fingers.

8. A hand rest should be provided for holding the hand higher than the base of the keys. More specifically, for all fingers other than the little finger, the handrest surface should be higher than the position of the key top surfaces when fully depressed and lower than the position of the key top surfaces when at rest. For the little finger, the handrest surface should be below the key top surface at all positions.

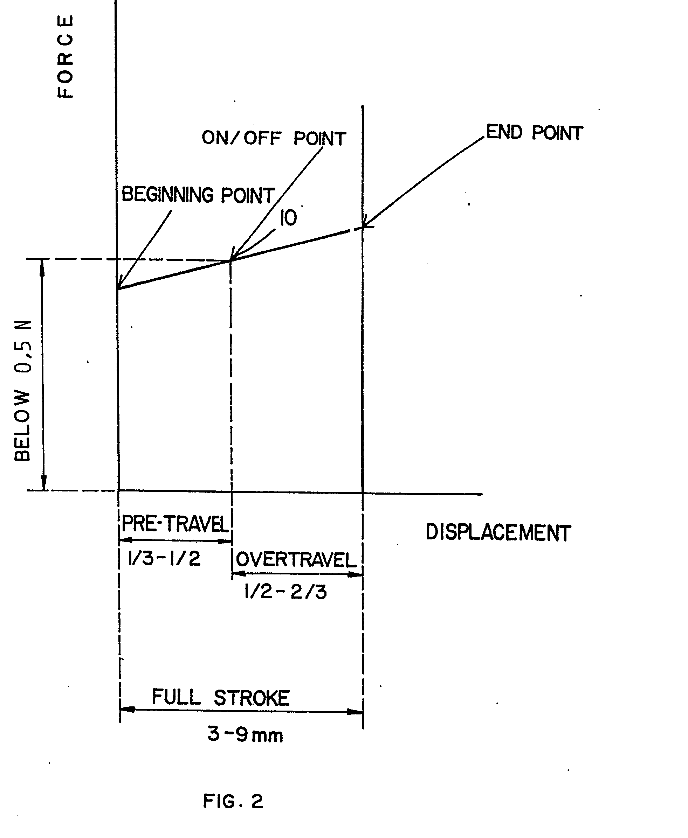

Reference is now made to Fig. 2 which illustrates the characteristics of a key constructed and operative in accordance with the present invention which is incorporated in accordance with the present invention in a chordic keyboard. Similarly to the diagram of Fig. 1, which illustrated the prior art embodiment, the diagram of Fig.2 is a force versus displacement curve. In contrast to the characteristics illustrated in Fig. 1, the key illustrated in Fig. 2 has a linearly increasing force-displacement relationship extending along its entire travel path and does not have any sudden increases of force. The data entry location (toggle point), indicated by reference numeral 10, is located at between one-third and one-half of the distance from the undepressed position along the travel path to the fully depressed position, thus defining a pre-travel distance of between one-third and one-half of the total travel path and an over-travel distance of between one-half and two-thirds of the total travel path.

The force-displacement characteristics of the key are the same in both directions, i.e. during depression and release. The full stroke of the key according to the present invention is preferably between 3 and 9 mm, while the force required to displace the key to the data entry location is about 0,50 N or below.

As noted above, the long travel path is designed to provide a high quality finger specific feedback to the operator, while the placement of the data entry location is intended to overcome problems of insufficient finger travel without encountering serious problems with finger drag.

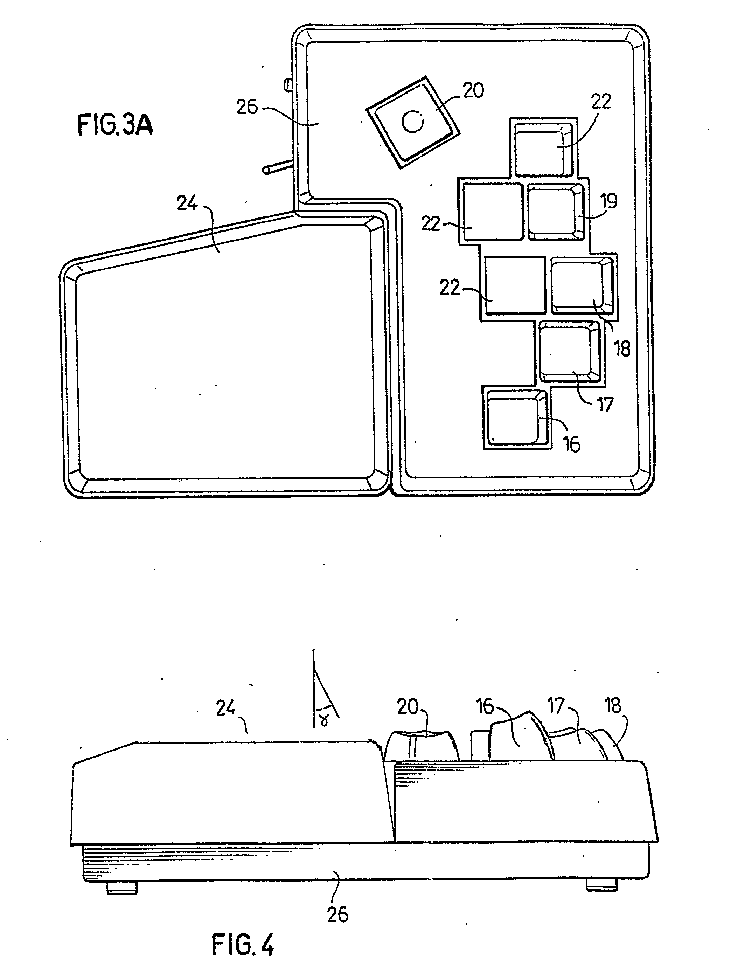

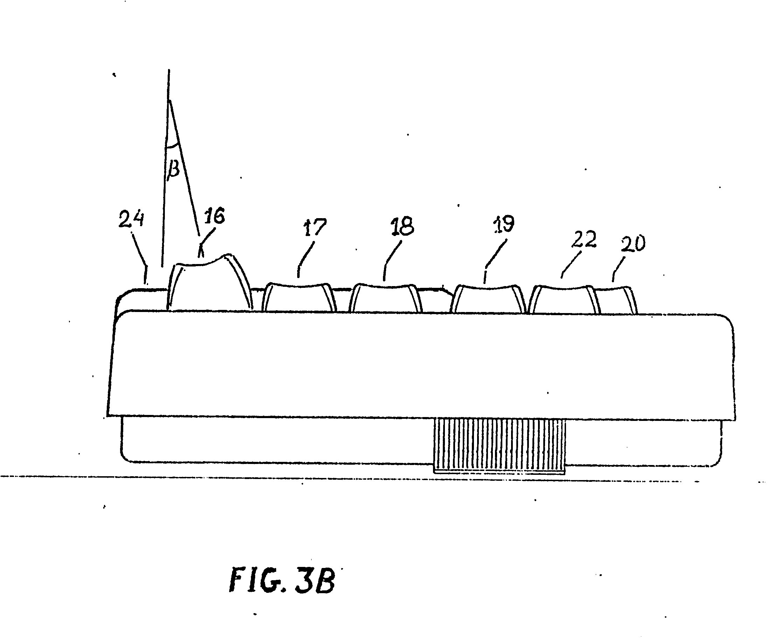

Reference is now made to Figs. 3 - 6 which illustrate a chordic keyboard constructed and operative in accordance with a preferred embodiment of the present invention and including a plurality of symbol entry keys 16 - 20 and function entry keys 22. A handrest 24 is defined on the keyboard housing 26 and supports an operator's hand as illustrated, higher than the base of the keys. Figs. 3A, 3B, 4 and 6 illustrate the different angular orientations of the different keys and that the travel path of each key is aligned along the axis of force exertion of the respective engaging finger. The arrows indicated in Figs. 3 and 4 indicate the horizontal component of the travel path access for each of the keys in the plane illustrated respectively in each of the two drawings. It is also appreciated that the location of the data entry location along the travel path may also vary from key to key in accordance with the physiological characteristics of the fingers.

The differences between the force requirements and orientations of the travel paths of the individual symbol entry keys 16 - 20 are summarized in the following table wherein the angle $\alpha$ is measured as shown in Fig. 4 and the angle $\beta$ is measured as shown in Fig. 3B.

| Key # | Force Requirement for Entry | Angle $\alpha$ | Angle $\beta$ |
|---|---|---|---|
| 16 | 0,3 N | $10^{\circ}$ | $20^{\circ}$ |
| 17 | 0,4 N | $15^{\circ}$ | $0^{\circ}$ |
| 18 | 0,5 N | $20^{\circ}$ | $0^{\circ}$ |
| 19 | 0,45 N | $10^{\circ}$ | $0^{\circ}$ |
| 20 | 0,50 N | $0^{\circ}$ | $0^{\circ}$ |

The foregoing is for a preferred embodiment of the present invention.

Reference is now made to Figs. 7 and 8 which illustrate the motion of the human hand in two different types of key engagement. Fig. 7 indicates the type of key engagement encountered in the use of a chordic keyboard wherein a plurality of keys are engaged at the same time. It is seen that the motion of the hand in such engagement is about a pivot location located approximately at the wrist of the operator's hand.

Fig. 8 illustrates the type of motion encountered for single key engagement, using conventional or chordic keyboards. Here it is seen that the motion of the finger is a pivotal motion about a location at the base of the finger. It may thus be appreciated that the length of the lever arm defined by the hand in the type of motion illustrated in Fig. 7 is significantly greater than the corresponding motion of the finger as illustrated in Fig. 8. It therefore follows that the angle of incidence of the fingers in the type of motion illustrated in Fig. 7 is further from the vertical than the angle of incidence for the single key type motion shown in Fig. 8.

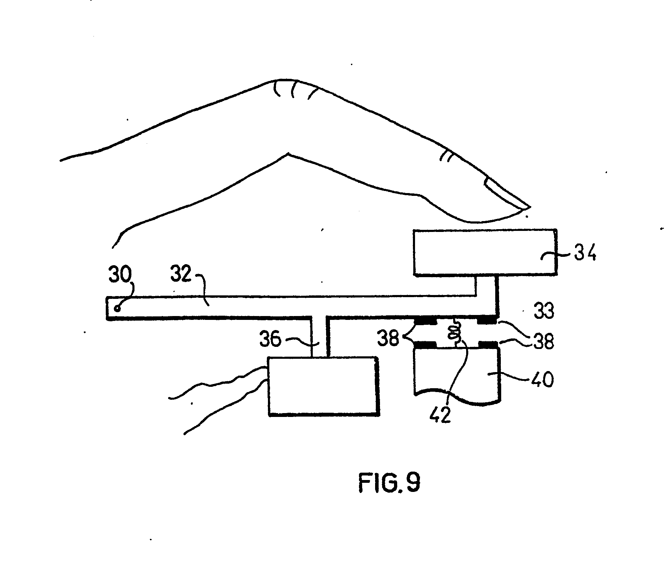

Fig. 9 illustrates a key which is particularly designed to accommodate an angle of incidence which is far from the vertical as in the type of motion encountered in a chordic keyboard and illustrated in Fig. 7 as well as the relatively vertical type of motion as illustrated in Fig. 8, which occurs for single key actuation. The key mechanism of Fig. 9 is relatively vector insensitive.

The key comprises a pivot mounting 30 about which a lever arm 32 moves in pivotal engagement. A key engaging surface 34 having a relatively large area, is mounted at the rearward portion 33 of the lever arm 32 and defines an elongate surface which extends axially along and parallel to a significant portion of the lever arm. A data entry engagement device 36 engages the lever arm 32 at a location therealong. Stop apparatus is provided adjacent the forward portion 33 of the lever arm and comprises a pair of corresponding stop pads 38 disposed on the underside of the lever arm 32, and at a stop member 40. A spring 42 is mounted between the stop member 40 and the forward portion 33 of the lever arm 32 to reach the lever arm upwardly of a normally at rest position.

There are a number of particular features embodied in the key of Fig. 9. The first is the significant length of the key engaging surface which accommodates relatively large finger areas due to the low angle of approach encountered in multi-key operation as shown in Fig. 7. The second important feature is the provision of a pivot location for the key which does not underlie the key itself and, therefore, enables the key to have a travel path significantly shifted from the vertical to the key surface and corresponding to the low angle of approach of the fingers as illustrated in Fig. 7. A further feature of the key of Fig. 9 is the fact that is operates generally uniformly notwithstanding variations in the angle of approach of the fingers and the finger force exertion vector. A fourth important feature is that the pivot location of the key underlies the finger of the operator and thus the travel path of the key is oriented generally in the same direction as the travel path of the finger. In such a way, the keys of Fig. 9 may be used uniformaly to replace conventional keys, each of which would have had to have a different travel axis angle in accordance with the teachings of the present invention.

Reference is now made to Fig. 10 which illustrates a plurality of groups 30, 32, 34, 36 etc. of location engagement arrangements. Considering briefly group 30 -one sees an array of four such location engagement arrangements arranged in a geometrical series, each being separated from the other by a defined geometric step. Thus, it is seen that the first location engagement arrangement comprises engagement of key 16 and has the letter N corresponding thereto. The next location engagement arrangement comprises engagement of key 17 and is associated with the letter 0. The third location engagement arrangement comprises engagement of key 18 and corresponds to the letter T, while the fourth location engagement arrangement comprises engagement of key 19 and corresponds to the letter E. It may be seen that the four location engagement arrangements illustrated in group 30 define a visually recognisable geometrically distinct set and also define a predetermined arrangement between themselves.

The sets corresponding to different groups may be similar and differ by a readily recognizable parameter, such as the number of keys employed for each letter.

The symbols N, O, T, E taken in their corresponding order define the word NOTE. In general, the purpose of the arrangement of the symbol NOTE is to define a word, whether it be a word appearing in a language having some meaning or not, which will tand to be remembered by an operator.

It may further be appreciated that the self contained group 30 comprising four symbols and four corresponding location engagement arrangements may be remembered easily and with a high degree of recall.

The next group, group 32, may now be considered and is seen to comprise three location engagement arrangements arranged in a different type of geometrical relationship which is also characterized by two features. The first feature is its distinction from the type of geometrical relationship characterized in any of the other groups. The second feature is defined order relationship between the location engagement arrangements defined by the geometrical relationship therebetween.

As in the case of group 30 each of the location engagement arrangements has a corresponding letter associated therewith. Thus, the location engagement arrangement comprising engagement of keys 19 and 20 is associated with the letter L, while the location engagement comprising engagement of keys 18 and 19 is associated with the letter A. The engagement of keys 17 and 18 is associated with the letter S, while the engagement of keys 16 and 17 is associated with the letter H.

It is a further feature of the present invention that the association between the location engagement arrangements and a particular symbol or letter may be determined in accordance with one or two of the following principles:

The first principle is frequency association, i.e. associating letters which are employed in a given language with a given frequency with geometrical configurations which are relatively easy or alternatively relatively hard to remember. When the association is between relatively frequent symbols and relatively easy combinations the aim is to provide speedy learning. When the association is between relatively frequent symbols and relatively hard to remember geometric associations the guiding principle is reinforcement of the hard to remember combinations by frequent recall.

The second operating principle is that of motoric convenience, i.e. the association of any engaged letters with location engagement arrangements which are relatively easy to execute.

For example, the relative frequency of appearance of letters in the English language is set forth in the following table:

0085645

| Letter | Relative Frequency |
|--------|-------------------|
| A | 7.81 |
| B | 1.28 |
| C | 2.93 |
| D | 4.11 |
| E | 13.05 |
| F | 2.88 |
| G | 1.39 |
| H | 5.85 |
| I | 6.77 |
| J | .23 |
| K | .42 |
| L | 3.60 |
| M | 2.62 |
| N | 7.28 |
| O | 8.21 |
| P | 2.15 |
| Q | .14 |
| R | 6.64 |
| S | 6.46 |
| T | 9.02 |
| U | 2.77 |
| V | 1.00 |
| W | 1.49 |
| X | .30 |
| Y | 1.51 |
| Z | .09 |

Source: Cryptanalysis by Helen Fouche Gaines, Dover Publications, Inc., New York

The average reaction time and percentage error for various patterns of 5-finger location engagement arrangements are set forth in the following table:
Source: Human Engineering Guide To Equipment Design, Edited by Harold P. Van Cott, Ph.D., and Robert G. Kinkade, Ph.D., American Institutes for Research, Washington, D.C., 1972.  Page 327.

| Pattern* | | | | | DRT (reaction time) (msec) | Error (%) |
|---|---|---|---|---|---|---|
| (1 | 2 | 3 | 4 | 5) | | |
| | | | 4 | | 281 | 5.9 |
| | | 3 | | | 285 | 2.4 |
| 1 | | | | | 289 | 1.8 |
| | 2 | | | | 292 | 5.0 |
| | | | | 5 | 294 | 5.6 |
| 1 | | | 4 | | 306 | 3.8 |
| | 2 | 3 | | | 306 | 8.8 |
| | | 3 | 4 | | 306 | 10.3 |
| 1 | 2 | | | | 310 | 6.2 |
| | 2 | 3 | 4 | | 311 | 9.1 |
| 1 | | 3 | | | 312 | 5.0 |
| 1 | 2 | 3 | 4 | | 314 | 4.1 |
| 1 | 2 | 3 | | | 315 | 5.3 |
| 1 | | | | 5 | 315 | 5.6 |
| | | | 4 | 5 | 316 | 11.5 |
| | 2 | | 4 | | 316 | 12.1 |
| | 2 | 3 | 4 | 5 | 317 | 4.4 |
| 1 | | 3 | 4 | | 320 | 10.6 |
| | | 3 | 4 | 5 | 321 | 7.6 |
| 1 | 2 | 3 | 4 | 5 | 325 | 7.4 |
| | 2 | | | 5 | 326 | 12.4 |
| 1 | | | 4 | 5 | 328 | 8.2 |
| 1 | 2 | | 4 | | 328 | 13.2 |
| 1 | | 3 | 4 | 5 | 330 | 12.4 |
| 1 | 2 | | | 5 | 335 | 11.8 |
| | | 3 | | 5 | 343 | 13.2 |
| 1 | 2 | 3 | | 5 | 345 | 18.8 |
| 1 | | 3 | | 5 | 349 | 15.0 |
| | 2 | | 4 | 5 | 349 | 20.9 |
| 1 | 2 | | 4 | 5 | 351 | 25.9 |
| | 2 | 3 | | 5 | 352 | 22.1 |

*1 = thumb;  5 = small finger

The arrangement of Fig. 10 is constructed in accordance with a preferred embodiment of the invention in that, for the most part, it employs actual words, which are well known and easily remembered. Another particular feature of the arrangement of Fig. 10 is that the relatively most frequently appearing letters are associated with the easiest location engagement arrangements as well as with the geometrical arrays of location engagement arrangements which are easiest to remember. Stated in another way, there is a positive relationship between motoric ease, ease of recall and frequency of symbol occurance. This feature enhances the speed with which the code is learned.

Another important feature of the arrangement of Fig. 10 is that certain letters which appear with a relatively low frequency, such as F, M and Q, for example, are defined by combination of other location engagement arrangements. Each of the letters F, M and Q is defined by the combination of the thumb engagement (1), which alone denotes a blank space, together with another letter. Thus F is defined by space plus P, M is defined by space plus S and Q is defined by space plus H. It is appreciated that other letters may be defined in much the same way.

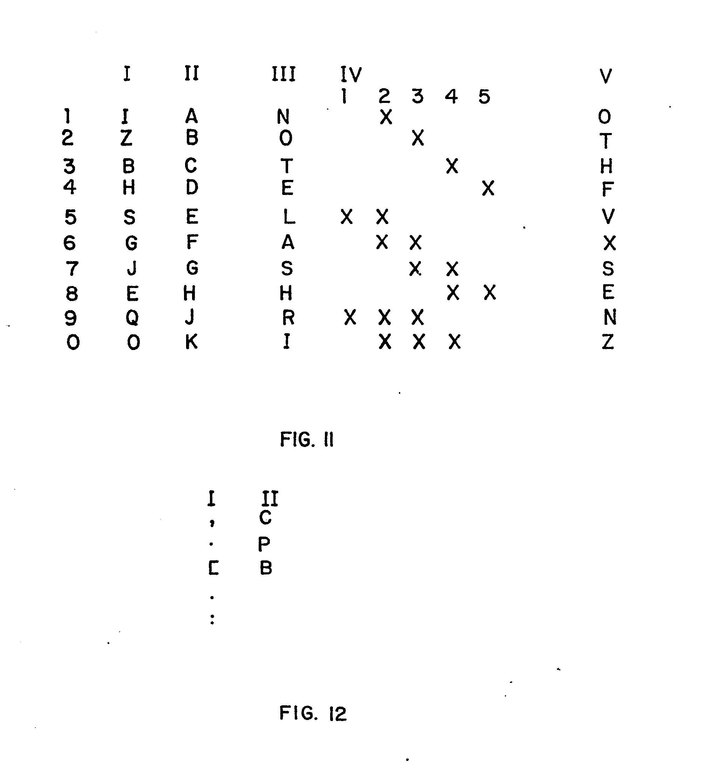

Reference is now made to Fig. 11 which illustrates five alternative coding configurations for numbers. Column I matches numbers to letters by geometrical similarities. Column II matches numbers to letters having appearing in the same order. Column III matches numbers to letters having relatively high frequency which are associated with key location engagement arrangements as indicated by the code appearing in Fig. 10. Column IV associates numbers directly to key engagement arrangements which may also be used for letters, when a different function key entry is effected. Column V matches numbers to either the first letter or the most distinctive letter of their names.

Fig. 12 is an exemplary partial listing of correspondence between codes for punctuation or symbols and letters. Column I is an illustrative partial listing of symbols. Column II employs the first letter of the name of the symbol as the code letter.

It is a particular feature of the present invention according to a preferred embodiment thereof that of the set of total possible chords or single key location engagements, those chords which are motorically easiest employing 1 and 2 finger engagements, are preferred.

It is also a particular feature of the present invention that the location engagement arrangements are selected insofar as possible to avoid motoric errors. Thus in view of the particular tendon arrangement of finger 4, as described hereinabove, the code of Fig. 10, according to a preferred embodiment of the present invention, does not employ any arrangement in which fingers 3 and 5 are engaged and finger 4 is not engaged, since this arrangement is difficult to execute motorically.

It will be appreciated by persons skilled in the art that the present invention is not limited to what has been particularly shown and described hereinabove. Rather the scope of the present invention is defined only by the claims which follow.

CLAIMS:

1.    A chordic keyboard comprising:

a plurality of keys, each key having a predetermined travel path and a data entry location disposed at a predetermined location along said predetermined travel path, said plurality of keys including at least first, second and third fingers, at least two of said first, second and third keys differing from each other in at least one of said predetermined travel paths, the position of said data entry location and the force required for key travel.

2.    A chordic keyboard comprising a plurality of keys, each of said plurality of keys having a predetermined travel path of length in the range of 3 - 9 mm.

3.    A chordic keyboard including a plurality of keys, each of said plurality of keys having a linear force/dis-placement characteristic over its entire travel path.

4.    A chordic keyboard comprising a plurality of keys, each key having a predetermined travel path and a data entry location located at a position between one-third and one-half of the distance from the at rest position of the key to its fully depressed position along said predetermined travel path.

5.    A chordic keyboard comprising a plurality of keys, each key having a predetermined travel path which is arranged along a travel axis, the travel axes of at least two of said plurality of keys being non-parallel.

6.    A chordic keyboard according to claim 5 and wherein said travel axes arranged to be parallel to the axes of force exertion of human fingers arranged to engage respective keys.

7.    A chordic keyboard according to claim 1 and also comprising handrest means for holding an operator's hand at a height approximately equal to or higher than said plurality of keys.

8.    A chordic keyboard according to claim 2 and also comprising handrest means for holding an operator's hand at a height approximately equal to or higher than said plurality of keys.

9.       A chordic keyboard according to claim 3 and also comprising handrest means for holding an operator's hand at a height approximately equal to or higher than said plurality of keys.

10.      A chordic keyboard according to claim 4 and also comprising handrest means for holding an operator's hand at a height approximately equal to or higher than said plurality of keys.

11.      A chordic keyboard according to claim 5 and also comprising handrest means for holding an operator's hand at a height approximately equal to or higher than said plurality of keys.

12.      A chordic keyboard according to claim 1 and wherein each of said plurality of keys comprises an elongate key engagement surface arranged for pivotal motion relative to a pivot location disposed other than forward of said key engagement surface and underlying an operator's finger.

13.      A chordic keyboard according to claim 1 and also comprising means for providing a repeat key output when a key is depressed for a time beyond a predetermined threshold duration.

14.      A chordic keyboard according to claim 2 and also comprising means for providing a repeat key output when a key is depressed for a time beyond a predetermined threshold duration.

15.      A chordic keyboard according to claim 3 and also comprising means for providing a repeat key output when a key is depressed for a time beyond a predetermined threshold duration.

16.      A chordic keyboard according to claim 4 and also comprising means for providing a repeat key output when a key is depressed for a time beyond a predetermined threshold duration.

17.      A chordic keyboard comprising a plurality of keys each including a key engagement surface arranged for pivotal motion relative to a pivot location disposed other than underlying said key engagement surface.

18.      A chordic keyboard according to claim 17 and wherein said key engagement surface defines an elongate surface.

19.     A chordic keyboard according to claim 17 and wherein said plurality of keys includes keys having different travel path lengths.

20.     A chordic keyboard according to claim 17 and wherein said plurality of keys includes keys having different force displacement characteristics.

21.     A method for high speed teaching of chordic keyboard code operation comprising the steps of:

selecting a plurality of chordic keyboard location engagement arrangements having a predetermined visually sensible geometric relationship therebetween;

assigning to each of said plurality of location engagement arrangements a symbol corresponding thereto; and

presenting said plurality of location engagement arrangements together with a word defined by the plurality of symbols corresponding thereto for memorization by an operator during training.

22.     A method according to claim 21 and wherein said plurality of location engagement arrangements and corresponding words defines a group which is remembered by interassociation therebetween.

23.     A method according to claim 21 and wherein there is provided a high speed teachable code for use with chordic keyboards and comprising:

a first plurality of groups of associated symbols and location engagement arrangements, each group comprising:

a second plurality of location engagement arrangements having a visually sensible geometrical relationship therebetween, each of said location engagement arrangements having associated therewith a symbol, said symbols of each group being combinable in a readily memorizable word.

24.     A method according to claim 23 and wherein said symbols comprise letters.

25.     A method according to claim 21 and wherein location engagement arrangements having relatively high motoric efficiency are assigned symbols appearing with relatively high frequency.

26.　　　A method according to claim 21 and wherein a plurality of location engagement arrangements defining a geometric pattern which is relatively easy to remember is assigned to a plurality of symbols appearing with relatively high frequency.

27.　　　A method according to claim 21 and wherein symbols appearing in combination with relatively high frequency are assigned to non-overlapping location engagement arrangements.

28.　　　' A high speed teachable code for use with chordic keyboards and comprising:

a first plurality of groups of associated symbols and key location engagement arrangements, each group comprising:

a second plurality of key location engagement arrangements having a visually sensible geometrical relationship therebetween, each of said key location engagement arrangements having associated therewith a symbol, said symbols of each group being combinable in a readily memorizable word.

29.　　　A high speed teachable code for use with chordic keyboards according to claim 28 and wherein said second plurality of location engagement arrangements together define a readily memorizable geometrical configuration.

30.　　　A chordic keyboard comprising:

a plurality of keys arranged on a base, said plurality of keys defining a set of possible key location engagement arrangements, said set including a first plurality of groups of key location engagement arrangements each associated with a corresponding group of symbols, each group comprising a second plurality of key location engagement arrangements having a visually sensible geometrical relationship therebetween each of said key location engagement arrangements having associated therewith a symbol, said symbols of each group being combinable in a readily memorizable word.

31. A chordic keyboard according to claim 30 and wherein said second plurality of location engagement arrangements together define a readily memorizable geometrical configuration.

32. A chordic keyboard according to claim 31 and wherein said first plurality of groups are differentiated by a single parameter, such as the number of keys engaged for each symbol.

0085645

1/8

FIG. I

FIG. 2

FIG.3A

26

20

22

22

19

22

18

17

16

24

FIG.4

24

20 16 17 18

26

FIG. 3B

FIG.5

FIG.6

FIG 7

FIG 8

FIG. 9

```
        (1 2 3 4 5)

        N           5
30 ——▶O         4
        T       3
        E     2

        L 1 2
32 ▶A    2 3
        S       3 4
        H         4 5

        R 1     3
34 ▶I 1       4
        D 1       5

        C 1 2 3
36 ▶U    2 3 4
        P       3 4 5

        K 1 2 3 4
38 ▶G    2 3 4 5
        B 1 2 3 4 5

40 ▶V    2       5
        Y    2   4

42 ▶W 1 2   4
        X 1 2     5

        F 1   3 4 5
44 ▶M 1   3 4
        Q 1     4 5

46 ▶J 1 2   4 5
        Z    2   4 5
```

*1= thumb;  5= small finger

FIG. 10

| | I | II | III | IV | | | | | V |
|---|---|---|---|---|---|---|---|---|---|
| | | | | 1 | 2 | 3 | 4 | 5 | |
| 1 | I | A | N | | X | | | | O |
| 2 | Z | B | O | | | X | | | T |
| 3 | B | C | T | | | | X | | H |
| 4 | H | D | E | | | | | X | F |
| 5 | S | E | L | X | X | | | | V |
| 6 | G | F | A | | X | X | | | X |
| 7 | J | G | S | | | X | X | | S |
| 8 | E | H | H | | | | X | X | E |
| 9 | Q | J | R | X | X | X | | | N |
| 0 | O | K | I | | X | X | X | | Z |

FIG. 11

| I | II |
|---|---|
| , | C |
| . | P |
| [ | B |
| . | |
| : | |

FIG. 12